Europäisches Patentamt

European Patent Office

Office européen des brevets

(19)

(11) **EP 1 403 864 A2**

(12) **EUROPEAN PATENT APPLICATION**

(43) Date of publication:
**31.03.2004 Bulletin 2004/14**

(51) Int Cl.⁷: **G11B 19/04**, H01H 35/14, G11B 5/54

(21) Application number: **03021017.3**

(22) Date of filing: **17.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.09.2002 JP 2002287118**

(71) Applicant: **Kabushiki Kaisha Toshiba Tokyo (JP)**

(72) Inventors:
  • **Masao, Fujiki, Toshiba Corp.**
  **Minato-ku Tokyo 105-8001 (JP)**
  • **Sawabe, Hiroshi, Toshiba Corp.**
  **Minato-ku Tokyo 105-8001 (JP)**
  • **Chiba, Koichi, Toshiba Corp.**
  **Minato-ku Tokyo 105-8001 (JP)**
  • **Kobayashi, Koichi, Toshiba Corp.**
  **Minato-ku Tokyo 105-8001 (JP)**

(74) Representative: **Henkel, Feiler & Hänzel Möhlstrasse 37 81675 München (DE)**

(54) **Electronic apparatus and shockproof method**

(57)     An agravity sensor (92) is a mechanical switch which is opened in an agravity state. A CPU (21) determines based on the output from this agravity sensor (92) if the self apparatus is falling. If it is determined that the self apparatus is falling, the CPU (21) instructs an IDE interface controller (61) to transmit an unload command for retracting a magnetic head to an HDD (63). At this time, the CPU (21) uses, as the unload command, a reset signal independent from general commands such as a read signal, write signal, and the like, which are processed by the HDD (63) in the order they are accepted.

FIG. 2

EP 1 403 864 A2

**Description**

The present invention relates to a shockproof technique that takes a measure against any shock acting when an electronic apparatus which incorporates, e. g., a magnetic disk device is dropped.

In recent years, various portable electronic apparatuses which can be powered by batteries, such as the portable information terminals called personal digital assistants(PDAs), digital cameras, and the like, have been developed and prevailed.

Since the user often carries such an electronic apparatus, he or she may inadvertently drop it. Therefore, it is indispensable to provide some protection mechanism against a shock. Especially, if a storage device such as a hard disk or the like with physical operation experiences a shock during access, it is damaged by crash between the head and disk.

Hence, as described in, e.g., Jpn. Pat. Appln. KOKAI Publication Nos. 2002-8336, 2000-339893, 6-203505, and the like, a method of detecting the fall of the apparatus itself, and actively enabling a shockproof mechanism is proposed. As a sensor for detecting the fall of the apparatus itself, a sensor described in, e.g., Jpn. Pat. Appln. KOKAI Publication No. 2001-83173 can be applied.

Note that Jpn. Pat. Appln. KOKAI Publication Nos. 2000-14783, 2000-67770, and the like describe a shockproof method in a magnetic disk device.

In Jpn. Pat. Appln. KOKAI Publication No. 2002-8336, a magnetic disk device itself incorporates a fall sensor and a mechanism for retracting the magnetic head on the basis of the detection result of the fall sensor. However, in this method, each individual magnetic disk device must have a fall sensor and its control mechanism. When such a magnetic disk device is built into a desktop device, the fall sensor and control mechanism become superfluous. That is, this mechanism is unnecessary unless it is operated while built into a portable device which is likely to fall, and merely increases cost. Hence, two different types of magnetic disk devices with and without such a mechanism must be manufactured. Hence, in order to avoid such inefficiency, it is advantageous to provide a mechanism associated with a fall in a portable device which incorporates a magnetic disk device.

On the other hand, in Jpn. Pat. Appln. KOKAI Publication Nos. 2000-339893 and 6-203505 above, since a fall sensor, a control unit for retracting a magnetic head, and the like are provided on the electronic apparatus side, the above-mentioned inefficiency is avoided. In Jpn. Pat. Appln. KOKAI Publication Nos. 2000-339893 and 6-203505, upon detecting the fall of the apparatus itself, a magnetic head retraction (unload) command is issued to a magnetic disk device.

However, the magnetic disk device cannot accept any command during data write, read, or seek access. That is, even when an unload command is added, and is immediately issued upon detection of a fall, if another command process is in progress, the magnetic head is unloaded after that process, and the apparatus may crash against the ground before the magnetic head is completely unloaded.

The present invention has been made in consideration of the above situation, and has as its object to provide an electronic apparatus which can quickly and reliably move a magnetic head of a magnetic disk device to an unload area, and a shockproof method for an electronic apparatus.

In order to achieve the above object, the present invention provides an electronic apparatus characterized by comprising a disk device having a head, a sensor which detects a fall, and control means for controlling the disk device to move the head to an unload area using a signal which is independent from commands that are processed by the disk device in an order in which they are accepted, when the sensor detects the fall.

According to the present invention, it provides an electronic apparatus which can quickly and reliably move a magnetic head of a magnetic disk device to an unload area, and a shockproof method for an electronic apparatus.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view for explaining a use environment of an electronic apparatus according to a first embodiment of the present invention;
FIG. 2 is a block diagram showing the arrangement of the electronic apparatus according to the first embodiment;
FIG. 3 is a perspective view showing the structure of a magnetic disk device;
FIG. 4 shows a ramp mechanism of the magnetic disk device;
FIG. 5 shows a schematic arrangement of an agravity sensor of the first embodiment;
FIG. 6 is a block diagram showing functional blocks of a shockproof control program of the first embodiment;
FIG. 7 is a flowchart showing the operation sequence of shockproof control executed by the shockproof control program of the first embodiment;
FIG. 8 is a table showing general shockproof specifications of a magnetic disk device; and
FIG. 9 is a block diagram showing the arrangement of an electronic apparatus according to a second embodiment of the present invention.

Embodiments of the present invention will be described hereinafter with reference to the accompanying drawings.

(First Embodiment)

The first embodiment of the present invention will now be described.

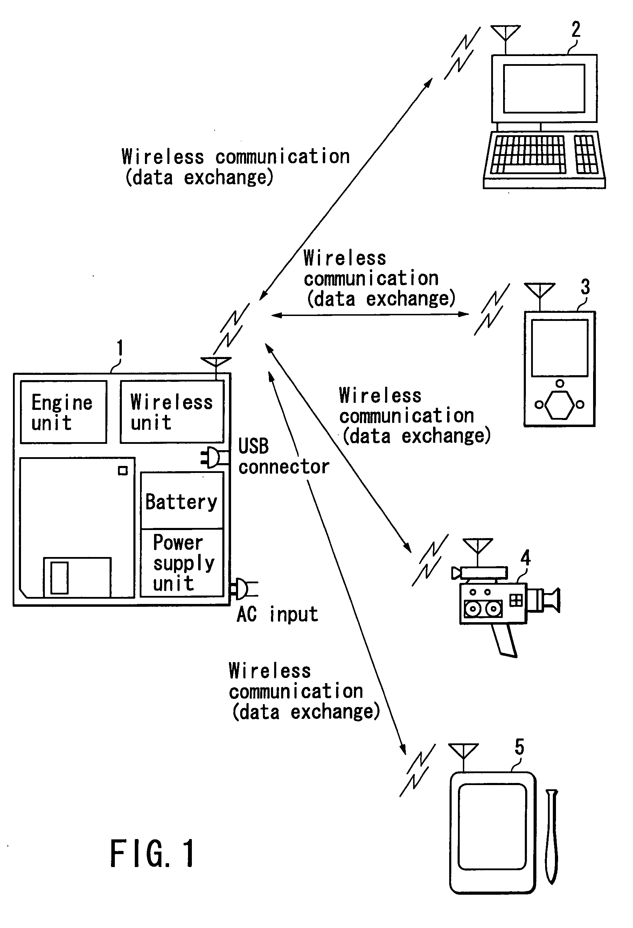

FIG. 1 is a view for explaining the use environment of an electronic apparatus according to an embodiment of the present invention.

As shown in FIG. 1, an electronic apparatus 1 of this embodiment is a storage device which incorporates a battery and has a wireless communication function. The storage device effects wireless communication with such information apparatuses as a personal computer 2, portable game machine 3, digital video camera 4, and PDA 5. This electronic apparatus 1 and information apparatuses 2 to 5 comprise Bluetooth modules, and effect wireless data communication via those Bluetooth modules.

The maximum wireless communication range of the Bluetooth modules is about 100 m. When the electronic apparatus 1 and information apparatuses 2 to 5 approach each other within this range, a Bluetooth link is automatically established to allow data exchange.

The electronic apparatus 1 also has a USB connector that receives a USB cable, and comprises a wired communication function that effects wired data communication via this USB connector.

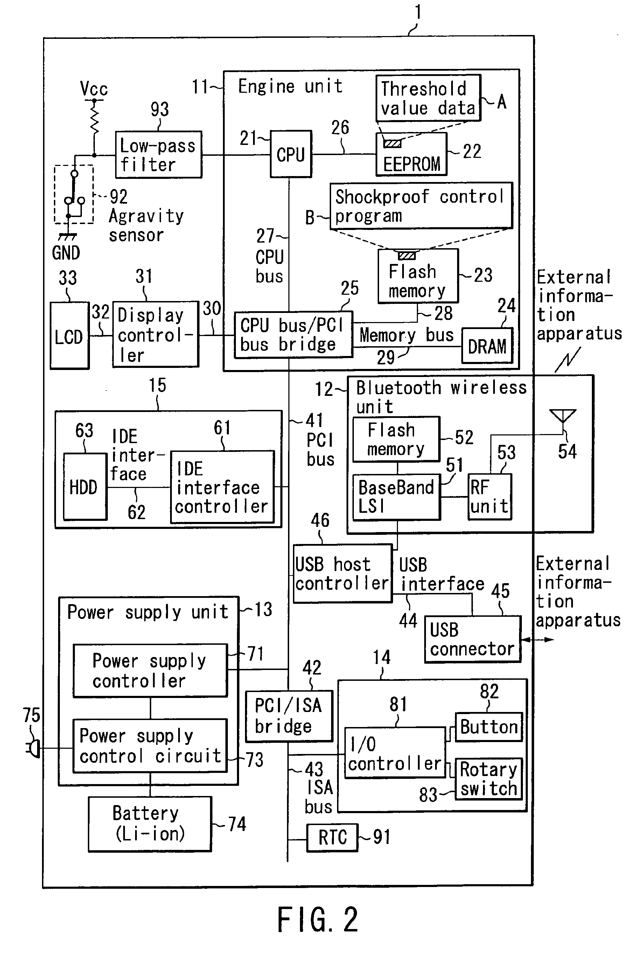

FIG. 2 is a block diagram showing the arrangement of this electronic apparatus 1.

As shown in FIG. 2, this electronic apparatus 1 has an engine unit 11, Bluetooth wireless unit 12, power supply unit 13, setup operation unit 14, and data storage unit 15.

The engine unit 11 controls the overall electronic apparatus 1. A CPU 21 as a core of this engine unit 11 is connected to an EEPROM 22 via a bus 26. The EEPROM 22 stores various kinds of control information including threshold value data A (to be described later).

The CPU 21 is connected to a CPU bus/PCI bus bridge 25 via a CPU bus 27. A flash memory 23 is connected to the CPU bus/PCI bus bridge 25 via a memory bus 28, and a DRAM 24 is also connected to it via a memory bus 29.

The flash memory 23 stores various programs which include shockproof control program B (to be described later) that describe the operation sequence of the CPU 21. On the other hand, the DRAM 24 is used as a work memory of the CPU 21. Also, the DRAM 24 is used as a buffer area of the data storage unit 15.

The CPU bus/PCI bus bridge 25 is an interface bridge between the CPU bus 27 and a PCI bus 41, and is connected to a display controller 31 via a bus 30. The display controller 31 executes display control of an LCD 33 which is connected to it via a bus 32.

The PCI bus 41 is connected to an ISA bus 43 via a PCI/ISA bridge 42. The PCI bus 41 is connected to the Bluetooth wireless unit 12 and a USB interface 44 via a USB host controller 46. A USB connector 45 used to connect an information apparatus via a cable is connected to the USB interface 44.

The Bluetooth wireless unit 12 comprises a baseband LSI 51, flash memory 52, antenna 54, and RF unit 53. The baseband LSI 51 is connected to the USB host controller 46, and controls a Bluetooth wireless function. The flash memory 52 stores a program to be executed by the baseband LSI 51. The RF unit 53 controls an RF signal between the baseband LSI 51 and antenna 54.

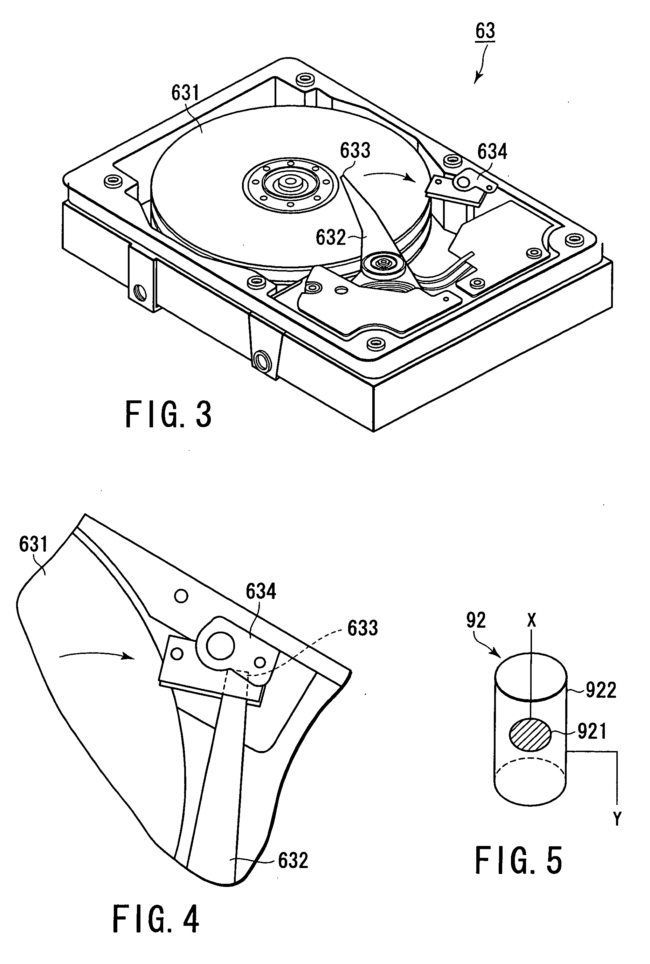

The data storage unit 15 is connected to the PCI bus 41. The data storage unit 15 has an IDE interface controller 61 and a magnetic disk drive device (to be referred to as an HDD hereinafter) 63. The IDE interface controller 61 is connected via the PCI bus 41. The HDD 63 is connected to the IDE interface controller 61 via an IDE interface 62. As shown in FIG. 3, the HDD 63 rotates a magnetic disk 631 at high speed, and brings a read/write magnetic head 633 provided on the distal end of an arm 632 closer to the surface of the magnetic disk 631, thus reading/writing data. Therefore, when the HDD experiences a shock during its operation, these components are damaged. To avoid such damage, the HDD 63 has a mechanism for retracting the magnetic head 633 to a predetermined position (ramp mechanism 634) as a so-called shockproof mechanism. FIG. 4 shows the state wherein the magnetic head 633 is retracted to the ramp mechanism 634. This electronic apparatus 1 is characterized by quickly and reliably activating this shockproof mechanism, and such characteristic feature will be explained later.

Furthermore, the power supply unit 13 is connected to the PCI bus 41. The power supply unit 13 comprises a power supply controller 71 and a power supply control circuit 73. The power supply controller 71 is connected to the PCI bus 41. The power supply control circuit 73 is connected to the power supply controller 71. A battery 74 and AC input 75 are connected to the power supply control circuit 73. When this electronic apparatus 1 is used in a mobile environment, the battery 74 supplies electric power. When the battery 74 is charged or when the electronic apparatus 1 is used in an environment in which the apparatus can be AC-driven, the AC input 75 supplies electric power. Electric power from the battery 74 or AC input 75 is supplied to components required to operate the electronic apparatus 1, e.g., the engine unit 11, wireless unit 12, data storage unit 15, and the like.

The setup operation unit 14 is connected to the ISA bus 43. The setup operation unit 14 includes an I/O controller 81, and a button 82 and rotary switch 83. The I/O controller 81 is connected to the ISA bus 43. The button 82 and rotary switch 83 are connected to the I/O controller 81. The button 82 and rotary switch 83 are used to set up the operation environment of the electronic apparatus 1 and to start up the apparatus. Threshold value data A described above is set up using this setup operation unit 14.

Furthermore, a real-time clock (RTC) 91 is connected to the ISA bus 43. The RTC 91 is a timing module which operates on its own built-in battery, and measures the system time using a plurality of registers.

In addition, an agravity sensor 92 and low-pass filter 93 are provided to this electronic apparatus 1. The agravity sensor 92 is a mechanical switch, which is opened in an agravity state, and has a structure shown in, e.g., FIG. 5. In a normal state, the agravity sensor 92 is set so that an inner iron ball 921 contacts the inner wall of a surrounding case 922 as a conductor. As a result, signal lines X and Y are electrically connected. On the other hand, in an agravity state, the iron ball 921 separates from the inner wall of the surrounding case 922 and, as a result, signal lines X and Y are disconnected. That is, whether or not the self apparatus is falling can be detected based on the output from this agravity sensor 92. This agravity sensor 92 is opened every time a shock that is light enough to continue the system operation acts. As a result, the sensor 92 is repeatedly opened/closed within a short period, and generates a so-called chattering signal. The low-pass filter 93 is provided to absorb the chattering signal generated by the agravity sensor 92.

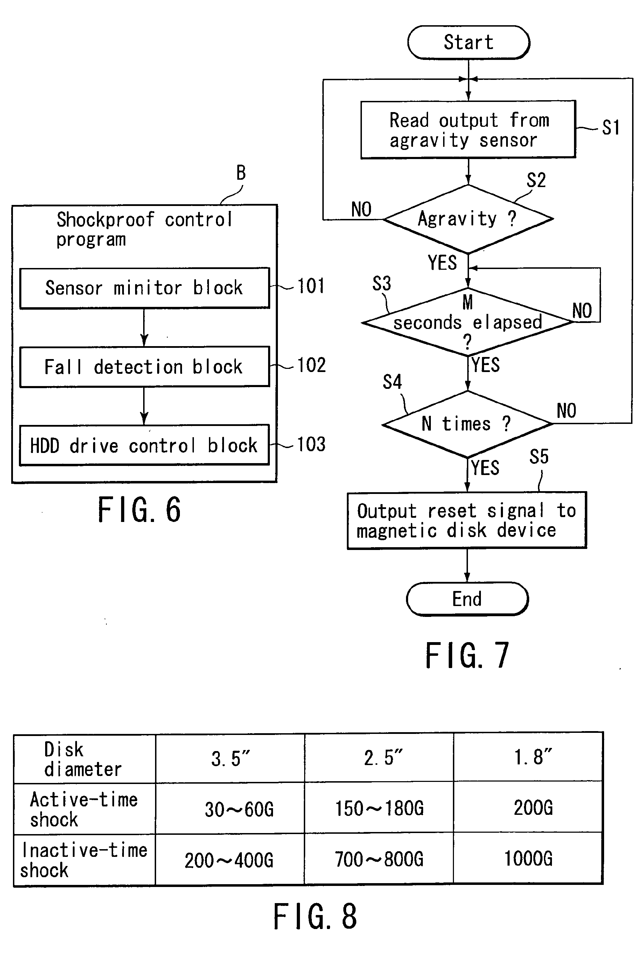

The operation principle of the shockproof control of the HDD 63 executed by shockproof control program B above will be described below. FIG. 6 shows functional blocks of this shockproof control program B.

As shown in FIG. 6, shockproof control program B has respective processing blocks, i.e., a sensor monitor block 101, fall detection block 102, and HDD drive control block 103.

The sensor monitor block 101 monitors if an open signal that has passed through the low-pass filter 93 is output from the agravity sensor 92. Upon detection of the output open signal, the sensor monitor block 101 informs the fall detection block 102 accordingly.

The fall detection block 102 detects if the associated apparatus is falling. Upon reception of information from the sensor monitor block 101, the block 102 checks if that information continues. If the information continues, the fall detection block 102 checks M seconds later if that information continues. When this information is repeatedly detected N times, the fall detection block 102 determines that the associated apparatus is falling. These values M and N are given by threshold value data A in the EEPROM 22. For example, an agravity state in daily life (e.g., during walking) continues 100 ms or less at longest. Hence, if an agravity state continues 100 ms or longer, since falling can be determined, a combination of M and N is set to have, e.g., 100 ms as a threshold value. By setting M and N using threshold value data A in the EEPROM 22, various use environments can be flexibly coped with. When it is determined that the associated apparatus is falling, the fall detection block 102 informs the HDD drive control block 103 accordingly.

The HDD drive control block 103 effects control to retract the magnetic head 632 of the HDD 63 to the ramp mechanism 633 against a shock upon crash. Upon receiving information from the fall detection block 102, the block 103 instructs the IDE interface controller 61 to transmit an unload signal to the HDD 63.

Upon detection of a fall, even when a read or write process in the HDD 63 is in progress, the magnetic head 632 must be immediately retracted, i.e., unloaded to the ramp mechanism 633. Hence, the HDD drive control block 103 uses a reset signal independent from general commands such as a read signal, write signal, and the like, which are processed in the order they are accepted. With this signal, the unload process can be quickly and reliably executed irrespective of the operation state of the HDD 63.

FIG. 7 is a flowchart showing the operation sequence of shockproof control of the HDD 63 executed by shockproof control program B.

Shockproof control program B reads out the output from the agravity sensor 92 via the low-pass filter 93 (step S1). If this output indicates a closed state, i.e., it does not sense any agravity (NO in step S2), shockproof control program B determines that the associated apparatus is not falling (step S3).

On the other hand, if the output from the agravity sensor 92 indicates an open state, i.e., it senses agravity (YES in step S2), shockproof control program B waits for M seconds given by threshold value data A (step S4), and then repeats processes from step S1. If this repetition continues N times given by threshold value data A (YES in step S5), shockproof control program B determines that the associated apparatus is falling, and outputs an unload signal to the HDD 63 (step S6).

As described above, since the electronic apparatus 1 of this embodiment controls the HDD 63 to unload using the reset signal, the magnetic head 632 of the HDD 63 can be quickly and reliably retracted to the ramp mechanism 633.

In general, an HDD can withstand shocks to degrees shown in FIG. 8. For example, a 1.8" HDD can withstand an active-time(operating) shock up to 200G, and an inactive-time(non-operating) shock up to 1000G. Hence, in the case of the 1.8" HDD, it is required as shockproof specifications to provide a shock-absorbing mechanism for absorbing an active-time(operating) shock to be 200G or less, and an inactive-time(non-operating) shock to be 1000G or less. Of these shocks, absorption of the former active-time(operating) shock is in question here. In such a case, a shock-absorbing mechanism which has excessive shock-absorption power results in increases in cost and size.

On the other hand, since this electronic apparatus 1 can control the HDD 63 to quickly unload irrespective of the operation state of the HDD 63, the time required from detection of a fall until completion of unload can be estimated to be nearly constant. Hence, this electronic apparatus 1 calculates a falling distance of an object within this required time by:

Required time t (s) = (2 × distance h (m)

/gravitational acceleration G (m/s$^2$))1/2     (1)

for G = 9.8

Then, a shock-absorbing mechanism having shock absorbing power that can suppress a shock that acts upon falling from the calculated distance to 200G or less is arranged.

In this manner, a shock-absorbing mechanism having appropriate shock-absorbing power can be arranged, thus preventing the cost and size from increasing unwantedly.

(Second Embodiment)

The second embodiment of the present invention will be described below.

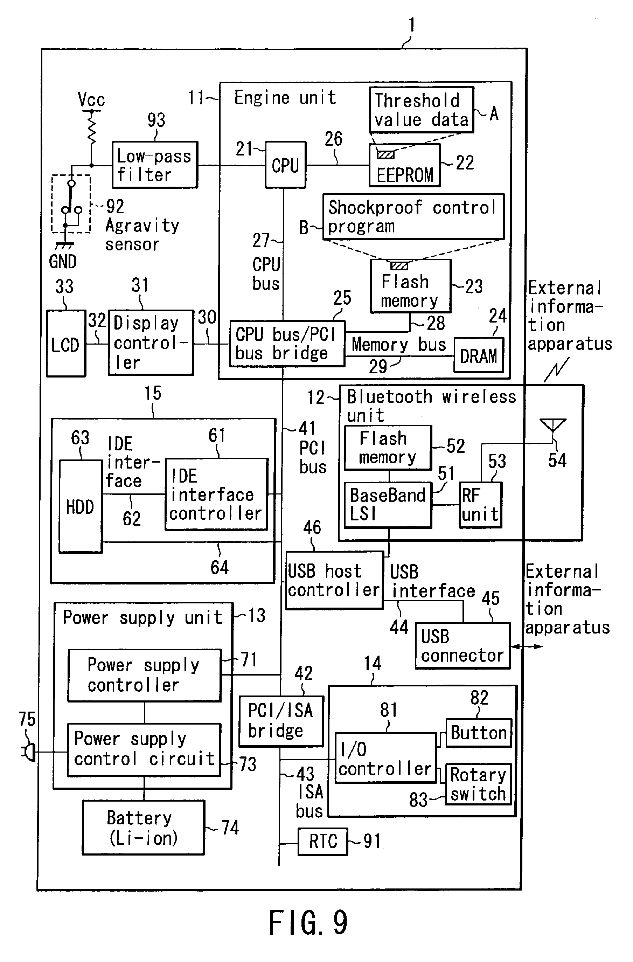

FIG. 9 is a block diagram showing the arrangement of an electronic apparatus 1 of the second embodiment.

The difference between the first embodiment described above and this second embodiment is that a signal line 64 that exchanges with the HDD 63 an unload signal as a signal independent from general commands such as a read signal, write signal, and the like, which are processed in the order they are accepted, is added. Upon receiving information from the fall detection block 102, the HDD drive control block 103 transmits a signal which is defined in advance as an unload signal with the HDD 63 via the signal line 64 to the HDD 63 in place of instructing the IDE interface controller 61 to transmit a reset signal to the HDD 63.

In the electronic apparatus 1 of the second embodiment, the magnetic head 632 of the HDD 63 can be quickly and reliably retracted to the ramp mechanism 633, and a shock-absorbing mechanism having appropriate shock absorbing power can be arranged, although a signal that deviates from the interface standard must be used.

**Claims**

1. An electronic apparatus **characterized by** comprising:

   a disk device(63) having a head;
   a sensor (92) which detects a fall; and
   control means (21) for controlling the disk device to move the head to an unload area using a signal which is independent from commands that are processed by the disk device in an order in which they are accepted, when the sensor detects the fall.

2. The apparatus according to claim 1, **characterized in that** the device is a magnetic device, and the head is a magnetic head.

3. The apparatus according to claim 1, **characterized in that** the signal is a reset signal of an interface standard with which the disk device complies.

4. The apparatus according to claim 1, **characterized by** further comprising:

   an independent signal line (64) configured to exchange the signal, and
   the control means transmits the signal to the disk device via the independent signal line.

5. The apparatus according to claim 1, **characterized by** further comprising a shock-absorbing unit which absorbs a shock that acts upon falling from a height h, when a time required to move the head to the unload area under the control of the control unit is given by a falling time t, satisfies an active-time shockproof specification of the disk device.

6. The apparatus according to claim 5, **characterized in that** a relationship between the falling time t and the height h is defined by:

   $t = (2h/G)^{1/2}$ (G: gravitational acceleration)

7. The apparatus according to claim 1, **characterized in that** the sensor is an agravity sensor using a mechanical switch which is opened in an agravity state.

8. A shockproof method for an electronic apparatus which has a disk device having a head, and a sensor for detecting a fall, **characterized by** comprising the steps of:

   determining (S2, S3, S4) whether or not the apparatus is falling; and
   controlling (S5) the disk device to move the head to an unload area using a signal which is independent from commands that are processed by the disk device in an order in which they are accepted, when the apparatus is falling.

9. The method according to claim 8, **characterized in that** the signal is a reset signal of an interface standard with which the disk device complies.

10. The method according to claim 8, **characterized in**

**that** the electronic apparatus further has an independent signal line configured to exchange a signal, and

the controlling includes transmitting the signal to the disk device via the independent signal line.

Wireless communication
(data exchange)

Wireless
communication
(data exchange)

Wireless
communication
(data exchange)

1

Engine
unit

Wireless
unit

USB
connector

Battery

Power
supply
unit

AC input

Wireless
communication
(data exchange)

2

3

4

5

FIG. 1

1

Vcc

93
Low-pass
filter

92
Agravity
sensor

GND

11 ~ Engine unit

Threshold
value data ~ A

21 ~ CPU    26

EEPROM ~ 22

Shockproof control
program

B

Flash
memory ~ 23

28

27 ~
CPU
bus

24

33    31

32
LCD    Display
control-
ler    30

25

CPU bus/PCI
bus bridge    Memory bus    DRAM

29

15

63    IDE
inter-
face    61

HDD    IDE
interface
controller

62

41
PCI
bus

12 ~ Bluetooth wireless
unit

Flash
memory ~ 52

51

BaseBand
LSI    53
RF
unit

54

46

USB host
controller    USB
interface    45

44    USB
connector

Power supply unit ~ 13

Power supply
controller ~ 71

75

Power supply
control circuit ~ 73

Battery
(Li-ion) ~ 74

42

PCI/ISA
bridge

43
ISA
bus

RTC ~ 91

14

81

I/O
controller    82
Button

83 ~ Rotary
switch

External
informa-
tion
apparatus

External
informa-
tion
apparatus

FIG. 2

**FIG. 3**

**FIG. 4**

**FIG. 5**

## FIG. 6

Shockproof control program — B

| Sensor minitor block | ~101 |
| Fall detection block | ~102 |
| HDD drive control block | ~103 |

## FIG. 7

Start

Read output from agravity sensor — S1

S2 — Agravity ?
NO / YES

S3 — M seconds elapsed ?
NO / YES

S4 — N times ?
NO / YES

Output reset signal to magnetic disk device — S5

End

## FIG. 8

| Disk diameter | 3.5″ | 2.5″ | 1.8″ |
|---|---|---|---|
| Active-time shock | 30~60G | 150~180G | 200G |
| Inactive-time shock | 200~400G | 700~800G | 1000G |

FIG. 9